# EUROPEAN PATENT APPLICATION

(11) **EP 4 566 567 A1**
(43) Date of publication of application: **11.06.2025**
(21) Application number: 24217057.9
(22) Date of filing: 03.12.2024
(51) Int. Cl.: A61C 8/00, A61C 3/16

(54) **KIT FOR DENTAL APPLICATIONS**

(30) Priority: 04.12.2023 IT 202300025761
(71) Applicant: Rhein 83 S.r.l., 40128 Bologna (BO) (IT)
(72) Inventor: STORNI, Gianni, 40065 PIANORO BO (IT)
(74) Representative: Modiano, Micaela Nadia

(57) **Abstract**

A kit for dental applications, which comprises at least one substantially tubular body (2) provided with an internal duct (3) which is open to the outside at respective ends of the body (2); a first end defines a cavity (4) adapted to accommodate, in a coupling configuration, the terminal portion (5a) of a pin (5) which can be coupled, directly or indirectly, to a maxillary bone tissue (A).

The kit further comprises at least:
- a retention ring (6), which has a radial cut (6a) and can be accommodated in the cavity (4), which is shaped complementarily; the retention ring (6) is configured to allow the introduction of the terminal portion (5a) of the pin (5) into the cavity (4) and to hinder its accidental egress,
- a release tool (7), comprising a shank having a first longitudinal segment (7a), which is terminal and can be inserted with play into the duct (3), and a second longitudinal segment (7b), which is threaded and can engage a female thread (3a) provided along the internal wall of the duct (3).

## Description

The present invention relates to a kit for dental applications.

In dentistry, the use is widespread of prostheses replicating one or more missing teeth of a patient, which are coupled to pins inserted into the maxillary bones of the patient.

In more detail, each pin is inserted directly into the jawbone (into the surviving root of the original tooth) or into a female thread embedded in the bone and rendered integral with the latter by osseointegration. In both cases, an enlarged head of the pin is kept projecting into the mouth, in order to allow coupling with the prosthesis. To this end, the prosthesis incorporates one or more containment components, shaped like a sort of tubular cylinder which defines an internal duct which is open at the ends, one of which defines a cavity which is shaped complementarily to the shape of the head of the pin, so as to be able to accommodate the latter by interlocking. At the opposite end, the components (embedded in the prosthesis) are externally accessible at the respective holes, which are visible on the outer surface of the prosthesis.

The stability of the coupling is ensured by fixing screws, which are introduced through each hole in the duct of the containment component and then screwed into a female thread provided inside the pin, so as to avoid accidental disengagement.

Normally, in order to ensure stable engagement, the dentist inserts a screw into each containment component or in all the components except one; so for example, if the prosthesis has four holes and four containment components which receive the heads of four respective pins, then the dentist stabilizes the coupling by using three or four fixing screws.

The screws allow fixing (in the ways described above) and at the same time offer practical methods of disassembly, when this becomes necessary for example to carry out check treatments, cleaning or hygiene, maintenance, etc.

In fact in this regard, the dentist simply needs to introduce a screwdriver into each hole of the prosthesis and then into the duct of the respective containment component inside it, in order to unscrew the screws and so subsequently be able to force the uncoupling from the pins.

Such implementation solution is however not devoid of drawbacks.

As seen in fact, in order to allow the disassembly, it is necessary the presence of a plurality of holes in the prosthesis, which offer access to the internal duct of the containment component and therefore to the fixing screw screwed into the female thread defined by the pin.

However, these holes can be quite unsightly and require complicated (or in any case laborious) contrivances to conceal them from view, when the prosthesis is in use, in the mouth of the patient.

In any case, they represent a potential catch point for impurities and bacteria and therefore they require treatments and precautions to guard against unwanted consequences.

The aim of the present invention is to solve the above-mentioned problems, by providing a kit for dental applications that offers practical methods for coupling and decoupling a prostheses, with a solution that offers high aesthetic impact.

Within this aim, an object of the invention is to provide a kit that is substantially free from contraindications of a hygienic/health nature.

Another object of the invention is to provide a kit for dental applications that makes it possible to reduce the number of holes in the prosthesis, with respect to conventional solutions.

Another object of the invention is to provide a kit that ensures high reliability of operation and is highly versatile.

Another object of the invention is to provide a kit that adopts an alternative technical and structural architecture to those of conventional kits.

Another object of the invention is to provide a kit that can be easily implemented using elements and materials that are readily available on the market.

Another object of the invention is to provide a kit that is of low cost and safely applied.

This aim and these and other objects which will become better apparent hereinafter are all achieved by a kit according to claim 1.

Further characteristics and advantages of the invention will become better apparent from the description of preferred, but not exclusive, embodiments of the kit according to the invention, which are illustrated by way of non-limiting example in the accompanying drawings wherein:

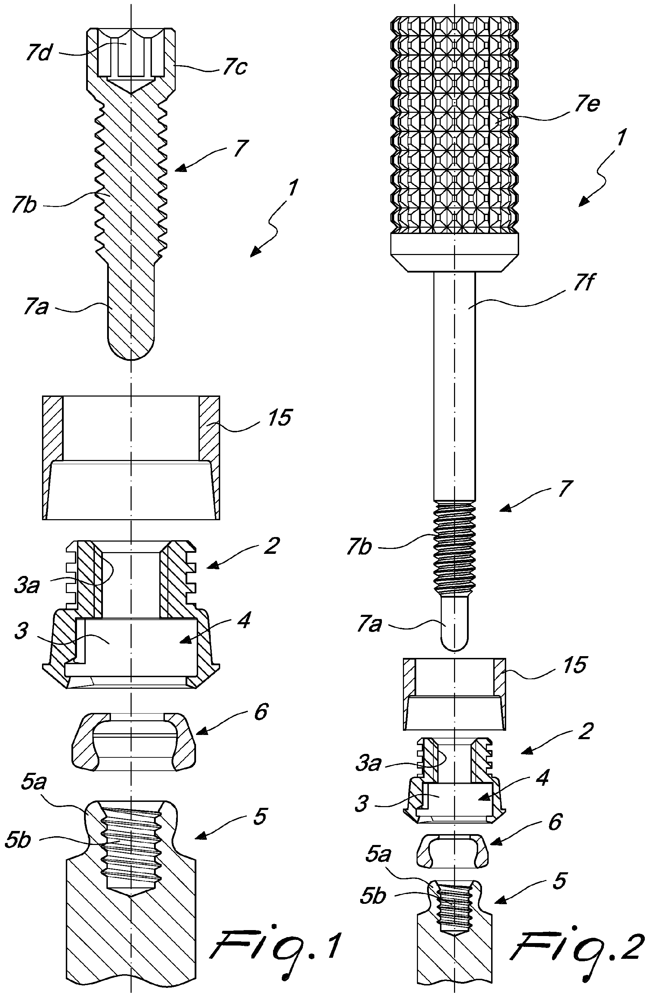

Figure 1 is a view of the kit according to the invention, in a first embodiment of the release tool, with the components shown in cross-section taken along a longitudinal plane;
Figure 2 is a view of the kit according to the invention, in a second embodiment of the release tool, with the components shown in cross-section taken along a longitudinal plane;
Figure 3 is a perspective view of the body of the kit according to the invention;
Figure 4 is a view from below of the body of Figure 3;
Figure 5 is a view from above of the body of Figure 3;
Figure 6 is a cross-sectional view of the body of Figure 3, taken along the same plane as in Figures 1 and 2;
Figure 7 is a perspective view of the retention ring of the kit according to the invention;
Figure 8 is a view from above of the ring of Figure 7;
Figure 9 is a view of the ring of Figure 7, taken along the same cross-sectional plane as in Figures 1 and 2;
Figure 10 is a perspective view of the release tool of the kit according to the invention, in the embodiment of Figure 1;
Figure 11 is a view from above of the tool of Figure 10;
Figure 12 is a perspective view of the release tool of the kit according to the invention, in the embodiment of Figure 2;

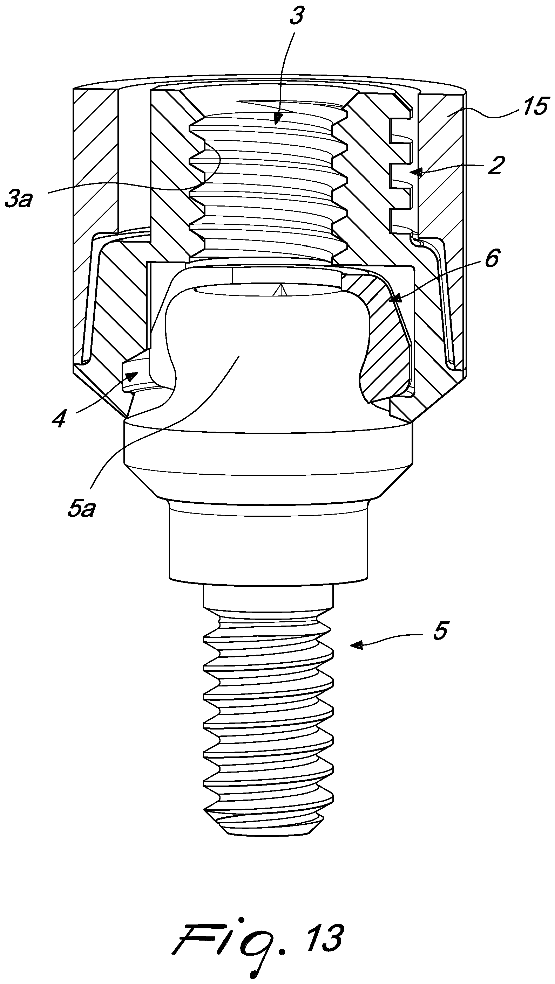

Figure 13 is a view of the coupling configuration between the body, the retention ring and the pin, all shown in cross-section taken along the same plane as in Figures 1 and 2;

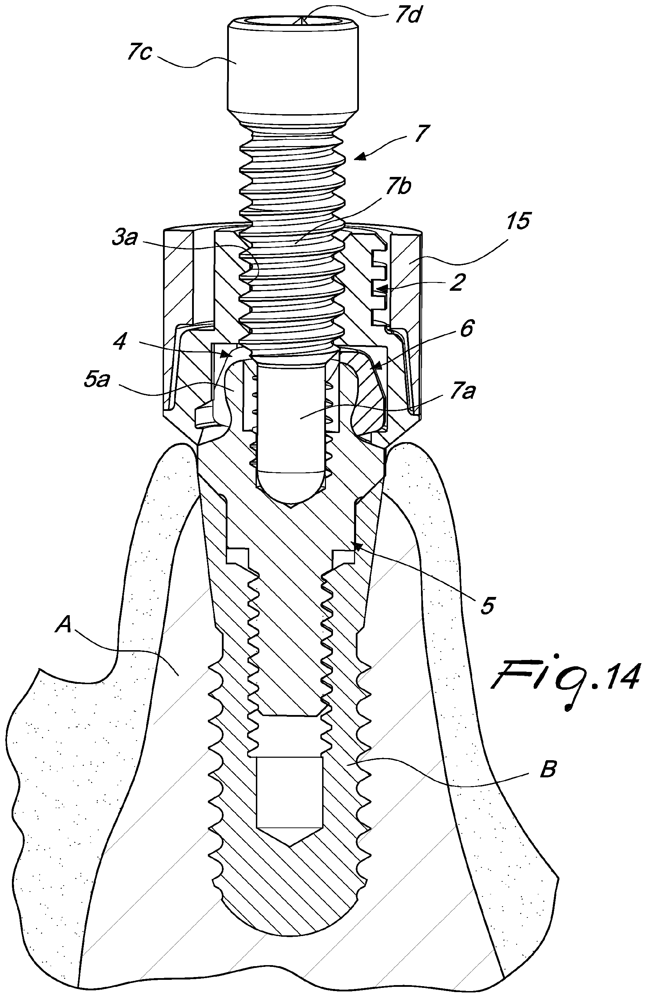

Figure 14 is a schematic view of the use of the tool of Figure 10, taken along the same cross-sectional plane as in Figure 1;

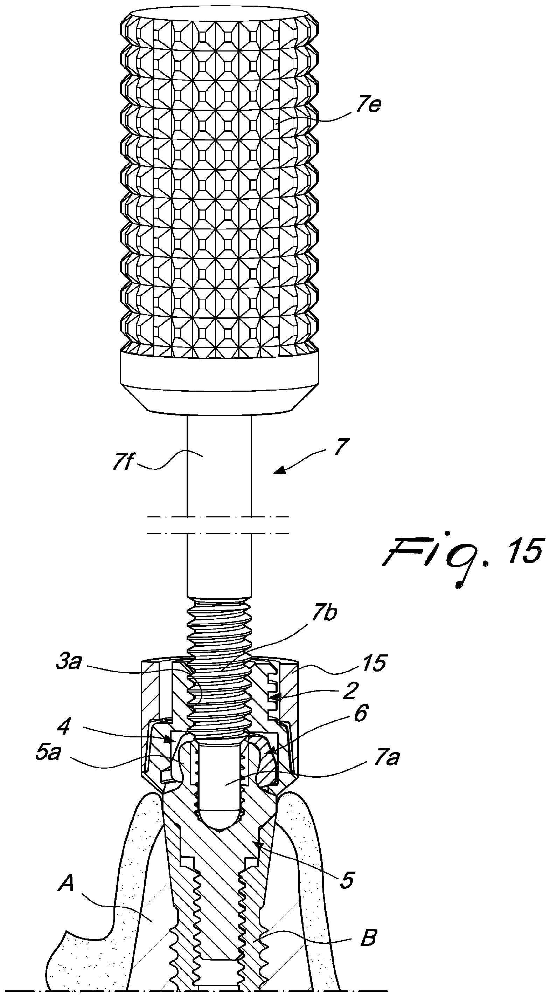

Figure 15 is a schematic view of the use of the tool of Figure 12, taken along the same cross-sectional plane as in Figure 2;
Figure 16 is a perspective view of a first additional component of the kit according to the invention;
Figure 17 is a schematic view of the use of the component of Figure 16 taken along the same cross-sectional plane as in Figures 1 and 2;
Figure 18 is a front elevation view of a second additional component of the kit according to the invention;
Figure 19 is a schematic front elevation view of the use of the component of Figure 18 and with some elements shown in partial cross-section, taken along a longitudinal plane;
Figure 20 is a perspective view of a third additional component of the kit according to the invention;
Figure 21 is a perspective view of a fourth additional component of the kit according to the invention;
Figure 22 is a schematic view of the use of the component of Figure 21 taken along the same cross-sectional plane as in Figures 1 and 2;
Figure 23 is a perspective view of a fifth additional component of the kit according to the invention;
Figure 24 is a cross-sectional view of the component of Figure 23, taken along a longitudinal plane;
Figure 25 is a perspective view of a sixth additional component of the kit according to the invention;
Figure 26 is a cross-sectional view of the component of Figure 25, taken along a longitudinal plane.

With reference to the figures, the reference numeral 1 generally designates a kit for dental applications.

In particular, in the ways that will be explained in the discussion below, the kit 1 makes it possible to couple a dental prosthesis to a bone tissue A, in a practical and easy manner. At the same time, the kit 1 can also be provided with elements that facilitate the step of providing the prosthesis itself.

The bone tissue A can belong to the maxillary bone or to the mandible bone of a patient who, as a consequence of trauma or diseases of various types, needs to have a dental prosthesis implanted in their mouth.

The prosthesis, which can be included in the kit 1 or be made/supplied separately (and which partly for this reason is not shown in the accompanying figures), can be of any type, and therefore can consist for example of a simple dental crown, a dental implant, or a dental bridge, in order to substitute one or more missing teeth, and can be fixed or removable. Typically however, the peculiarities of the invention are accentuated when the kit 1 is intended for use in coupling fixed prostheses that replicate a plurality of teeth.

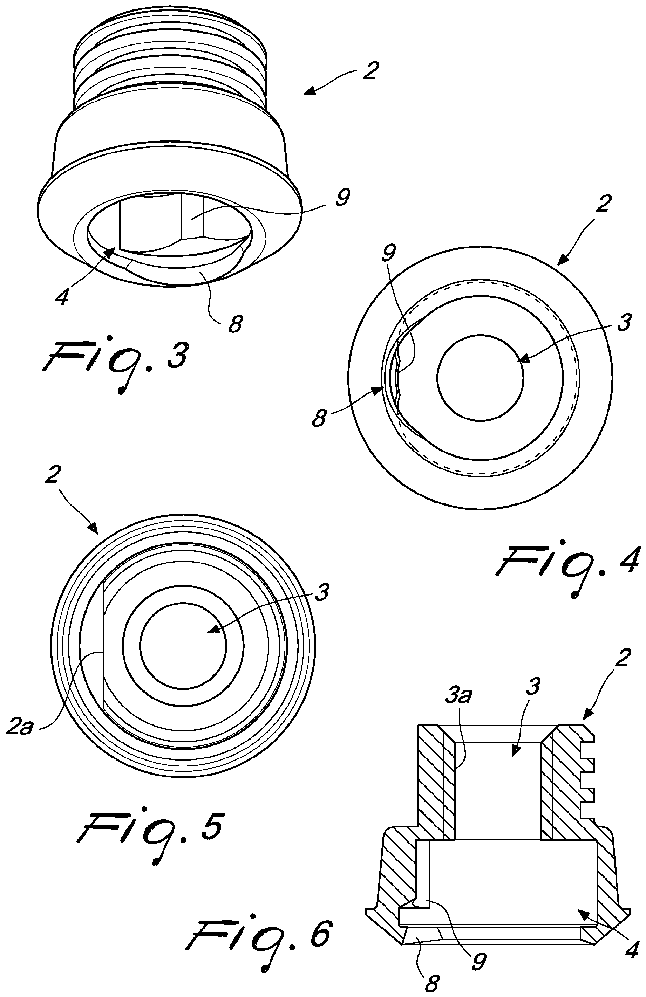

The kit 1 comprises, first of all, at least one body 2 (for example of the type shown in Figures 3-6) which is substantially tubular (in dental jargon it can also be defined as a "stump" or "abutment"), which is provided internally with an internal duct 3, which is open outward at respective ends of the body 2.

A first end of the body 2 defines a cavity 4 which is adapted to accommodate, in a coupling configuration, the terminal portion 5a (typically but not necessarily enlarged) of a pin 5, which can be coupled, directly or indirectly (i.e., with the interposition of one or more further components) to the maxillary bone tissue A of interest.

In more detail, it should be noted that the kit 1 can be effectively used in the application of implantology techniques, with the pin 5 in this case being inserted (at the opposite end to the terminal portion 5a) into a threaded seat B defined in an implant or in a pre-graft (which may be from a previous operation), in any case embedded in the jawbone (or in the surrounding anatomical tissues) and made integral with the latter at the end of a process of osseointegration.

Likewise, the kit 1 can be validly applied in the implementation of natural dentition techniques, in which at least some of the root of the tooth has survived in the mouth of the patient, and in this case the pin 5 (of root type) is inserted into the root of the lost tooth, and made integral therewith.

It should be noted that effectively the body 2 is a sort of container adapted to be incorporated in the prosthesis and, indeed, the prosthesis is often modeled around the body 2. More precisely, if the prosthesis is to replicate a single tooth, it can be modeled directly around the body 2.

If on the other hand (in the preferred but not exclusive application of the invention) it is intended to substitute a larger number of teeth, or an entire dental arch, then a transverse bar (substantially parallel to the edge of the gums) can be provided around a plurality of bodies 2 to be coupled to respective pins 5, which defines a form of skeleton (or "bridge skeleton", or just "bridge") on which the prosthetic teeth are then modeled. In the step of construction of the prosthesis therefore, the body 2 is used to obtain a correct reference for the prosthetic teeth and/or for the bridge skeleton; subsequently, when the prosthesis is completed, it is coupled to the pins 5 (which are mounted so as to project into the mouth of the patient with their terminal portions 5a) right at the cavities 4 (which are kept outwardly open) of the bodies 2, which are incorporated in the prosthesis.

The prosthesis can in any case be obtained in another manner: it will have, once completed, one or more bodies 2 embedded inside it with the cavities 4 kept in communication with the outside: in fact the coupling between the prosthesis and one or more pins 5 (previously inserted in the bone tissue A) is obtained by pressing the prosthesis against the pins 5, so as to force the introduction of the terminal portion 5a of said pins into the cavity 4.

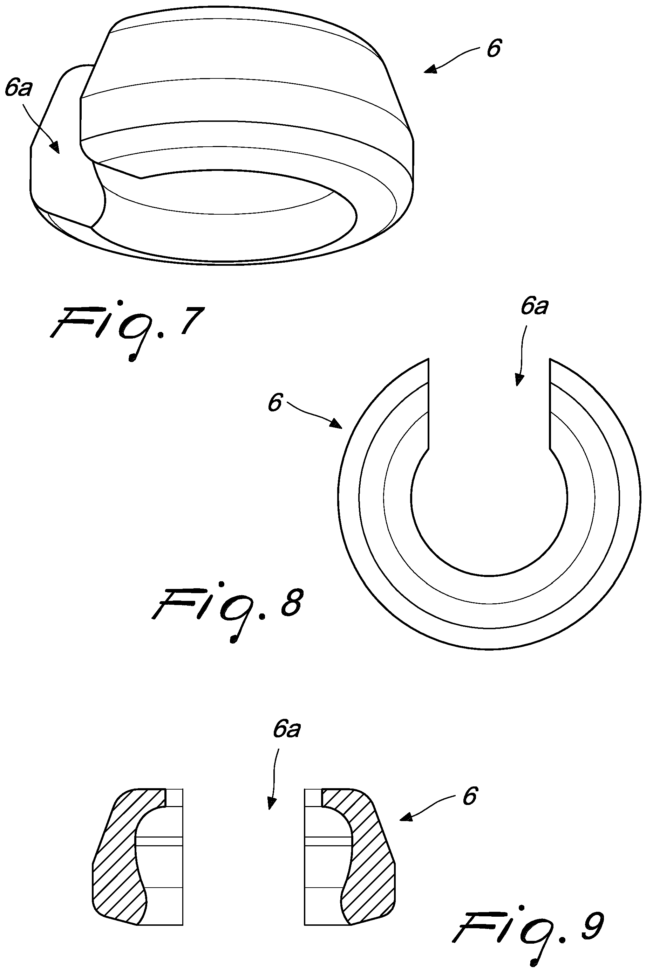

According to the invention, the kit 1 further comprises at least one retention ring 6 (of the type for example shown in Figures 7-9), which has a radial cut 6a (so as to give a C-shape to the retention ring 6) and which can be accommodated in the cavity 4. The dimensions of the retention ring 6 are such that it will rest against the bounding wall of the cavity 4, once it is inserted into the latter (as part of the procedure to obtain the coupling configuration); the cut 6a allows a temporary reduction of the bulk (the retention ring 6 is temporarily closed into itself), so as to pass through the narrower region present along the edge of the cavity 4, before widening out again inside that cavity.

The retention ring 6 is configured to allow (not oppose) the introduction of the terminal portion 5a of the pin 5 into the cavity 4 and to prevent any subsequent accidental egress of the terminal portion 5a from the cavity 4. In other words, once the coupling configuration is obtained, by introducing the terminal portion 5a of the pin 5 into the cavity 4, which already holds the retention ring 6, the latter is interposed between the terminal portion 5a and the body 2 and ensures that this configuration is maintained, without needing further components to ensure the stability of the coupling, which is what occurs in conventional solutions.

So in this way, the behavior described above of the retention ring 6 can be obtained by conveniently shaping the profiles of the retention ring 6 and the inclination of its outer surfaces (and the outer surfaces of the other components involved) and/or by adopting materials capable of effectively combining the elasticity necessary for the deformation of the terminal portion 5a of the pin 5 in the step of introduction into the cavity 4 with the resistance to be developed once the coupling has been obtained.

In particular, in this regard it is envisaged to make the retention ring 6 of polyether ether ketone, a material also known by the acronym "PEEK", which ensures a superior seal with respect to conventional solutions.

In turn, the body 2 can be made for example of titanium.

However, different choices of materials used are not ruled out, according to the specific requirements.

It should be emphasized from this point onward that the kit 1 can comprise a plurality of bodies 2 and of retention rings 6 (in particular, their number can be at least equal to, or higher than, the number of pins 5 to which it is intended to couple the prosthesis). In the discussion below any reference to a body 2 or to a retention ring 6 (and/or to another component of those described below) should be understood to refer to any number at will of such components, howsoever potentially forming part of the kit 1. Moreover, it is envisaged to produce or market kits 1 with bodies 2, retention rings 6 and/or other components of different dimensions, so as to provide the user with a heterogeneous set of formats and therefore of available solutions, from which to find the one in each instance that is best adapted to the specific requirements of each patient.

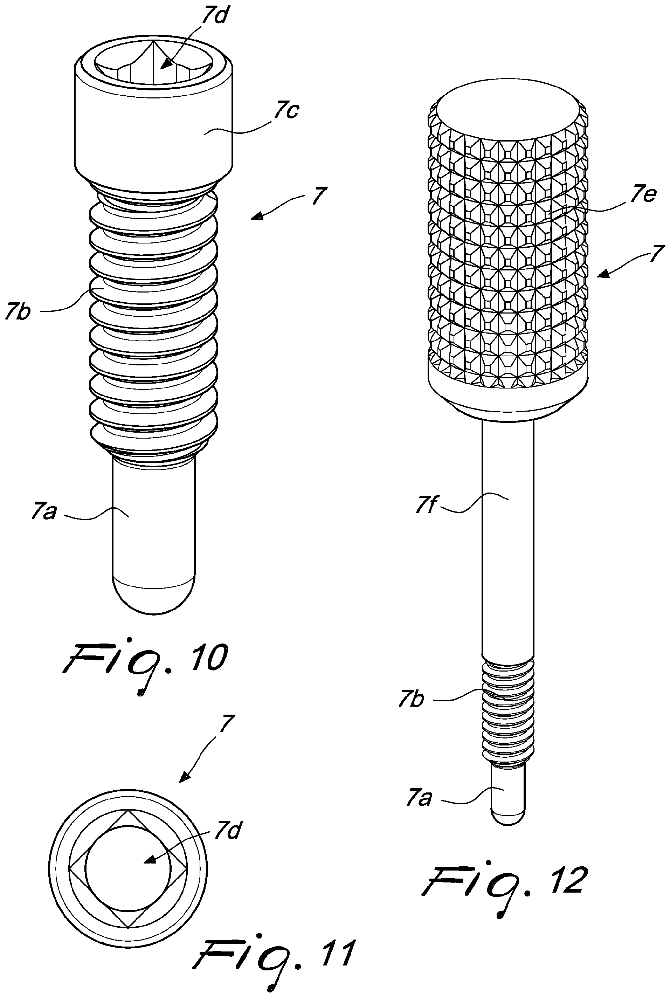

Furthermore, according to the invention the kit 1 comprises at least one release tool 7 (shown in two different embodiments in Figures 10-12), which comprises a shank having a first longitudinal segment 7a, which is terminal (i.e. at the end) and can be inserted with play into the duct 3, and a second longitudinal segment 7b, which is threaded and can engage with a female thread 3a provided along the internal wall of the duct 3.

The release tool 7 makes it possible to uncouple the body 2, and the prosthesis in which it is embedded, from the pin 5 (obviously when they are in the coupling configuration): to this end, the release tool 7 can be inserted in the duct 3 and initially the latter is traveled by the first longitudinal segment 7a which moves freely inside it. Continuing the insertion, the first segment 7a is introduced into an internal channel 5b of the pin 5, while the second segment 7b enters the duct 3 and engages the female thread 3a of the duct 3. The tool 7 then continues its travel, screwing into the duct 3, until the first segment 7a (conveniently dimensioned) arrives at the bottom of the internal channel 5b of the pin 5. By screwing the tool 7 further, the forced uncoupling of the body 2 (with the retention ring 6 inside the cavity 4) from the terminal portion 5a of the pin 5 is caused.

The kit 1 thus ensures a stable coupling between prostheses (in which one or more bodies 2 are embedded) and pins 5 which are coupled to the maxillary bones of a patient, by virtue of the retention ring 6 and its shape, which makes it possible to guard against the risk of accidental disengagement; at the same time, to dismount the prosthesis when necessary, the kit 1 comprises the tool 7, which can be used only once (by introducing it into a single body 2), to uncouple the prosthesis, independently of the number of bodies 2 and pins 5 that are mutually engaged.

Since the decoupling of the prosthesis from the pins 5 occurs by introducing the tool 7 into a single duct 3, it is sufficient to keep a single body 2 externally accessible (at the end opposite to the cavity 4) and therefore a single hole need to be kept in the prosthesis, while the accesses to the other bodies 2 (at the end opposite to the cavities 4) can be closed up. This achieves the set aim from this point onward.

In a first embodiment of the invention, illustrated in Figures 10 and 11 for the purposes of non-limiting example of the invention, the shank has a third longitudinal segment, which is terminal and opposite to the first segment 7a, which is constituted by an enlarged head 7c so as to give the tool 7 the shape of a (release) screw.

Preferably, the head 7c has a contoured notch 7d, which is configured to be coupled with a maneuvering wrench (optionally included in the kit 1) which enables the screwing or unscrewing thereof.

In a second embodiment of the invention, which does not exhaust the practical possibilities covered in the scope of protection claimed herein and which is illustrated in Figure 12 for the purposes of non-limiting example of the invention, the third longitudinal segment, which is terminal and opposite to the first segment 7a, is constituted by a hand grip 7e, which can be grasped by a user and which preferably is separated from the second segment 7b by a fourth segment 7f, so that the hand grip 7e can be kept outside the body 2 (and outside the prosthesis) when the user grasps it and actuates the tool 7 to decouple the body 2. In this embodiment therefore, the tool 7 is a sort of screwdriver.

It is possible to provide the kit 1 with a number at will of one or more tools 7 in each one of the embodiments indicated above (or others), so as to allow the user to choose which to use in each instance, according to the specific requirements and the space available for the maneuvers.

Usefully, in the preferred, but not exclusive, embodiment of the invention, the body 2 has a recess 8 provided along the inner rim of the cavity 4, which introduces a point of discontinuity in the profile of the latter, which otherwise is preferably circular. The recess 8 favors the facilitated introduction of the terminal portion 5a of the pin 5, for example if the latter has a particularly pronounced inclination with respect to the duct 3 (to the extent of determining actual undercuts). The recess 8 can assume the shape of a trough, a chute, an inclined plane, an indentation, or the like, according to the specific requirements. By facilitating the insertion, stresses that could otherwise develop and impinge on the components involved, are reduced or eliminated, especially when two or more bodies 2 incorporated in a same prostheses need to be coupled to respective pins 5 that are mutually inclined (not parallel to each other).

Advantageously, the body 2 can also have a protrusion 9 that projects from the bounding wall of the duct 3 (of the cavity 4), and which preferably is aligned with the recess 8. When the retention ring 6 is accommodated in the cavity 4, the protrusion 9 can be located at the cut 6a of the retention ring 6, and this effectively counteracts any rotation of the latter.

The body 2 typically has a substantially axially symmetric shape structure but can have a flattening 2a along its outer lateral surface which is aligned with the recess 8 and with the protrusion 9, so as to enable the user to more easily identify the position of these latter components.

The pins 5 repeatedly mentioned above can be sourced separately from the kit 1 or they may be from a previous operation.

In any case it is also possible for the kit 1 to also comprise one or more pins 5 which, as seen, can be coupled directly or indirectly to a maxillary bone tissue A. Preferably, such pin 5 (whether or not it is part of the kit 1) has a threaded internal channel 5b and the first longitudinal segment 7a of the tool 7 can be inserted with play into the channel 5b (it does not interact in any way with its threading).

While not ruling out other choices made, as in the accompanying figures, the terminal portion 5a of the pin 5 is shaped like the equatorial portion of a sphere, so as to favor an eased introduction into the cavity 4 and a stable coupling (by virtue of the rounded shape) and at the same time keeping the bulk in the mouth of the patient contained up until the moment of the coupling (it must be remembered in this regard that such terminal portion 5a is intended to be kept protruding from the edge of the gums), with respect to other solutions, for example solutions in which the terminal portion 5a is spherical, which in any case are included in the scope of protection claimed herein.

The kit 1 can further comprise one or more further, additional components, which enrich its functionality and versatility.

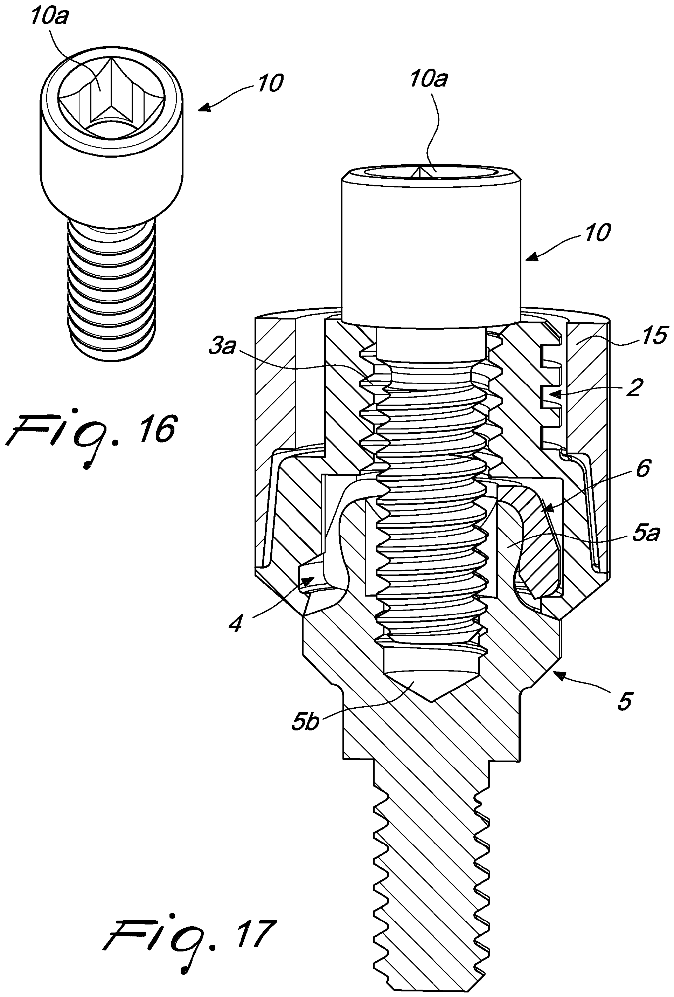

In particular, for example, the kit 1 can comprise at least one safety screw 10 (of the type for example of the one in Figure 16), which can be inserted with play into the duct 3 (the dimensions involved are such that it cannot engage with the female thread 3 a) but which can be screwed in the threaded internal channel 5b of the pin 5 (Figure 17). The safety screw 10 can perform a twofold function: during the operations to model the prosthesis it guards against the danger of accidental movements of the body 2; furthermore, when the prosthesis is coupled to the pins 5, it makes the coupling between one of these pins and the respective body 2 even stronger (if the action of the retention ring 6 is not considered sufficient); in the latter case, when it is decided to dismount the prosthesis, before using the tool 7 each safety screw 10 used must be unscrewed (and therefore there must be extra holes in the prosthesis for introducing it and removing it).

In order to be able to screw and unscrew the safety screw 10, the latter can have a contoured niche in its head portion 10a, which can be engaged by a maneuvering wrench.

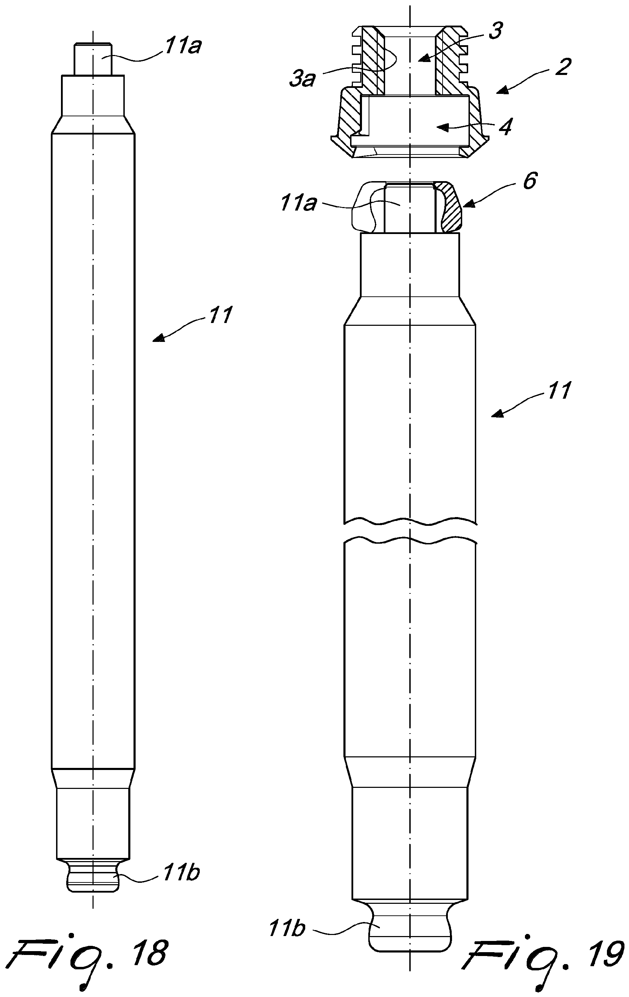

Usefully, the kit 1 can also comprise at least one insertion device 11 (Figure 18), which in turn is provided with a rod with a tang 11a the transverse cross-section of which corresponds to the shape of the retention ring 6, to facilitate its insertion into the cavity 4 (as shown in Figure 19).

Preferably, at the end opposite to the tang 11a the insertion device 11 has a tip 11b with a shape that corresponds to the terminal portion 5a of the pin 5; thus, after having introduced the retention ring 6 into the cavity 4, by also introducing the tip 11b into said cavity it is possible to test and adjust the retention ring 6 just inserted.

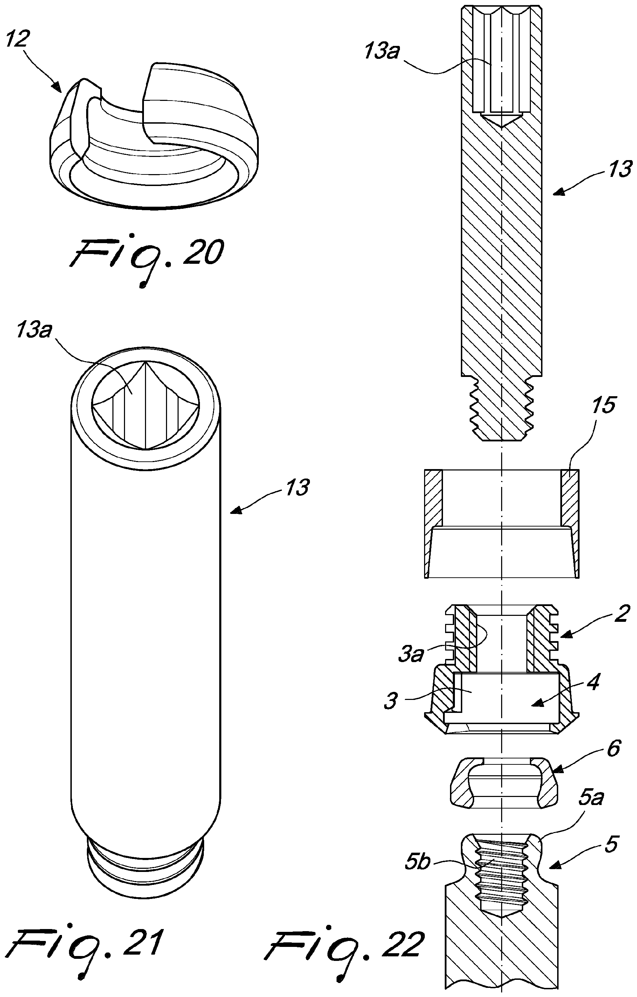

The kit 1 can further be provided with at least one laboratory ring 12 (Figure 20), effectively similar to the retention ring 6 (and in any case also preferably made of PEEK) and with a wider internal opening, so as to lessen the retentive effect and facilitate the laboratory operations, during the production of the prosthesis.

The kit 1 can further be provided with at least one spacer screw 13 (Figure 21), with a threading that can engage the female thread 3a of the duct 3, in order to leave a passing space for the tool 7. The spacer screw 13 has a seat 13a at the top which is shaped complementarily to a maneuvering wrench.

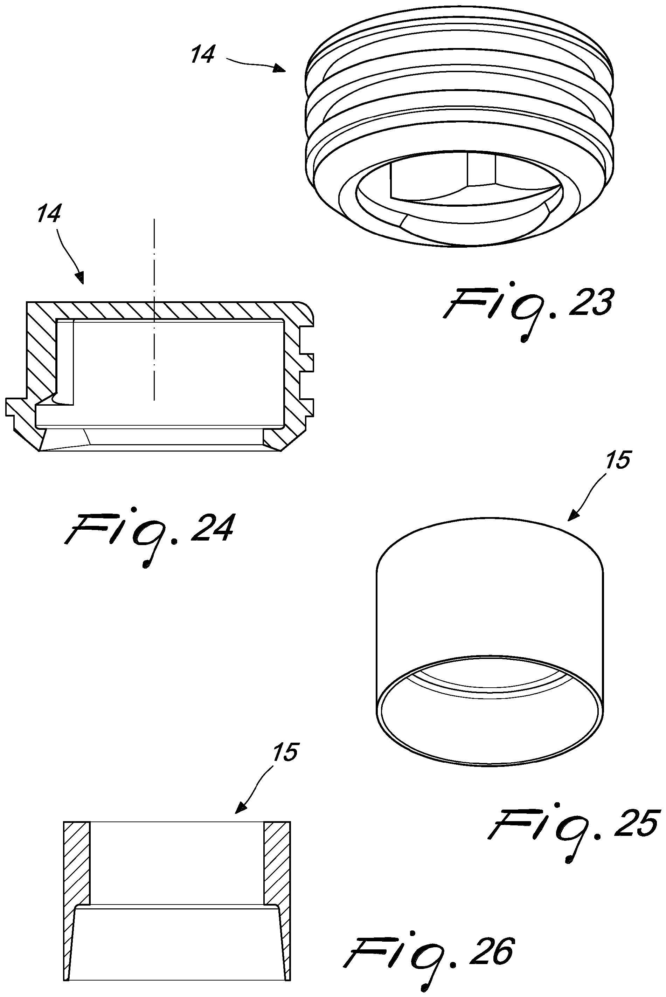

The kit 1 can further be provided with at least one container 14 (Figures 23 and 24), similar to the body 2 but without a female thread 3a; this is therefore a similar element to those used traditionally for coupling prostheses to pins, and which can be used in the context of the application of the invention, if it is not intended to use the tool 7 on the relevant pin 5 for releasing.

The kit 1 can further be provided with at least one sheath 15 (Figures 25 and 26) made of material that can be burned out: during the step of manufacturing the prosthesis, this makes it possible to leave a suitably-sized space before cementing the body 2 inside the metal structure on which the prosthesis is modeled. The sheath 15 is embedded in the resin and then melted, becoming an integral part of the structure.

The use of the kit according to the invention has already been explained in the foregoing pages.

It should be noted in any case that the coupling between the prosthesis and one or more pins 5 is obtained by forcing the introduction of the terminal portions 5a of said pins into the cavities 4 of the bodies 2, which are embedded in the prosthesis. A complementarily-shaped retention ring 6 is first introduced into the cavity 4, and allows the introduction of the terminal portion 5a but prevents its egress.

Thus, stable coupling is obtained without resorting to any other component, and solely by virtue of cooperation between bodies 2, retention rings 6 and pins 5.

When required, the release is obtained by virtue of the tool 7, which needs to be introduced into the body 2 (into a hole in the prosthesis at the end opposite to the cavity 4) until the second portion 7b is screwed into the female thread 3a and hence until the uncoupling (the egress from the cavity 4) is forced, not only pin 5 directly involved, but also of all the others (if present), in so doing uncoupling the prosthesis from them.

In other words, in the coupling configuration the retentive action thus obtained (by virtue in particular of the retention rings 6) makes it possible in particular to avoid needing to screw the prosthesis (as it is often done in the conventional procedure) by inserting fixing screws into each body 2, and therefore a hole does not need to be left for each one of these (although this can be done only if it is intended to also use one or more safety screws 10). Instead, it is sufficient to leave a single hole in order to allow the introduction of the tool 7.

In practice it has been found that the kit according to the invention fully achieves the set aim, in that the coupling is obtained in a practical and easy manner by virtue of the retention rings 6 on their own, while for the decoupling it is sufficient to keep a single hole in the prosthesis to ensure access to only one duct 3, into which the tool 7 is to be introduced only once.

Therefore it is not necessary to keep as many holes as there are pins 5, as would happen in conventional (screwed) solutions, and this ensures the possibility of obtaining a prostheses with a considerable aesthetic impact and with no contraindications of hygienic/health nature.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be substituted with other, different characteristics, existing in other embodiments.

In practice, the materials employed, as well as the dimensions, may be any according to requirements and to the state of the art.

The disclosures in Italian Patent Application No. 102023000025761 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A kit for dental applications, comprising at least one substantially tubular body (2) provided with an internal duct (3) which is open to the outside at respective ends of said body (2), a first end of said ends defining a cavity (4) adapted to accommodate, in a coupling configuration, a terminal portion (5a) of a pin (5) which can be coupled, directly or indirectly, to a maxillary bone tissue (A),
**characterized in that** it comprises at least:
- a retention ring (6), which has a radial cut (6a) and is configured to be accommodated in said cavity (4), which is shaped complementarily, said retention ring (6) being configured to allow the introduction of the terminal portion (5a) of the pin (5) into said cavity (4) and to hinder the subsequent accidental egress of the terminal portion (5a) from said cavity (4),
- a release tool (7), comprising a shank having a first longitudinal segment (7a), which is terminal and can be inserted with play into said duct (3), and a second longitudinal segment (7b), which is threaded and can engage a female thread (3a) provided along an internal wall of said duct (3).

2. The kit according to claim 1, **characterized in that** it comprises a plurality of said bodies (2) and of said retention rings (6).

3. The kit according to claim 1, **characterized in that** said shank has a third longitudinal segment, which is terminal and opposite to said first segment (7a) which is constituted by an enlarged head (7c), preferably provided with a contoured notch (7d), configured for mating with a maneuvering wrench.

4. The kit according to claim 1, **characterized in that** said shank has a third longitudinal segment, which is terminal and opposite to said first segment (7a) and is constituted by a hand grip (7e) which can be grasped by a user and is separated from said second segment (7b) by a fourth segment (7f).

5. The kit according to one or more of the preceding claims, **characterized in that** said body (2) has a recess (8) provided along the inner rim of said cavity (4), for the facilitated introduction of the terminal portion (5a) of the pin (5).

6. The kit according to one or more of the preceding claims, **characterized in that** said body (2) has a protrusion (9) projecting from the bounding wall of said duct (3), which can be placed at said cut (6a) of said retention ring (6), when said retention ring (6) is accommodated in said cavity (4), in order to contrast the rotation of said retention ring (6).

7. The kit according to one or more of the preceding claims, **characterized in that** it comprises at least said pin (5), which can be coupled directly or indirectly to a maxillary bone tissue (A), said pin (5) having a threaded internal channel (5b), said first longitudinal segment (7a) of said release tool (7) being insertable with play into said channel (5b).

8. The kit according to one or more of the preceding claims, **characterized in that** it comprises at least one safety screw (10), which can be inserted with play into said duct (3) and can be screwed into said threaded internal channel (5b) of said pin (5).

9. The kit according to one or more of the preceding claims, **characterized in that** it comprises at least one insertion device (11), provided with a rod with a tang (11a), the transverse cross-section of which corresponds to the shape of said retention ring (6), which can be fitted onto said tang (11a) for a facilitated insertion into said cavity (4), said insertion device (11) having, on the opposite side with respect to said tang (11a), a tip (11b) with a shape that corresponds to said terminal portion (5a) of said pin (5).

10. The kit according to one or more of the preceding claims, **characterized in that** said retention ring (6) is made of polyether ether ketone.
